(19) **Europäisches Patentamt**

**European Patent Office**

**Office européen des brevets**

(11) **EP 0 860 929 B1**

(12) # EUROPEAN PATENT SPECIFICATION

(45) Date of publication and mention
of the grant of the patent:
**15.01.2003 Bulletin 2003/03**

(51) Int Cl.⁷: **H02K 1/27**

(21) Application number: **98102909.3**

(22) Date of filing: **19.02.1998**

(54) **Permanent magnet type synchronous motor**

Permanentmagnet-Synchronmotor

Moteur synchrone du type à aimants permanents

(84) Designated Contracting States:
**DE FR IT**

(30) Priority: **21.02.1997 JP 3794597**
**18.11.1997 JP 31712097**

(43) Date of publication of application:
**26.08.1998 Bulletin 1998/35**

(60) Divisional application:
**01101010.5 / 1 115 189**

(73) Proprietor: **AISIN AW CO., LTD.**
**Anjo-shi Aichi 444-1192 (JP)**

(72) Inventors:
• **Yamaguchi, Yasuo**
**Anjo-shi, Aichi-ken 444-11 (JP)**
• **Hasebe, Masahiro**
**Anjo-shi, Aichi-ken 444-11 (JP)**
• **Wakuta, Satoru**
**Anjo-shi, Aichi-ken 444-11 (JP)**

(74) Representative: **VOSSIUS & PARTNER**
**Siebertstrasse 4**
**81675 München (DE)**

(56) References cited:
**EP-A- 0 048 966**

• **PATENT ABSTRACTS OF JAPAN vol. 096, no. 008, 30 August 1996 & JP 08 107639 A (YASKAWA ELECTRIC CORP), 23 April 1996,**
• **PATENT ABSTRACTS OF JAPAN vol. 097, no. 008, 29 August 1997 & JP 09 093843 A (MATSUSHITA ELECTRIC IND CO LTD), 4 April 1997,**
• **PATENT ABSTRACTS OF JAPAN vol. 097, no. 001, 31 January 1997 & JP 08 251848 A (YASKAWA ELECTRIC CORP), 27 September 1996,**
• **PATENT ABSTRACTS OF JAPAN vol. 004, no. 121 (E-023), 27 August 1980 & JP 55 077359 A (HITACHI LTD), 11 June 1980,**
• **PATENT ABSTRACTS OF JAPAN vol. 097, no. 002, 28 February 1997 & JP 08 256440 A (YASKAWA ELECTRIC CORP), 1 October 1996,**
• **PATENT ABSTRACTS OF JAPAN vol. 097, no. 004, 30 April 1997 & JP 08 340651 A (TOSHIBA CORP), 24 December 1996,**

EP 0 860 929 B1

**Description**

The present invention relates to a permanent magnet type synchronous motor.

In the related art, the permanent magnet type synchronous motor comprising a rotor rotatably supported and a stator arranged around the rotor. This rotor is equipped with a rotor iron core, and permanent magnets arranged in a plurality of portions in the circumferential direction of the rotor iron core, and the stator is equipped with a stator iron core and coils arranged in a plurality of portions arranged in the circumferential direction of the stator iron core.

In a permanent magnet type synchronous motor of a surface magnet type having sector-shaped permanent magnets exposed to the outer circumferential edge of the rotor iron core, the relative magnetic permeability of the permanent magnets is substantially at 1 so that the substantial air gap length, as taken from the stator side, is the sum of the gap between the stator and the rotor and the thickness of the permanent magnets. This lowers the reaction of the stator to make the field-weakening control difficult.

Thus, there has been provided (in JP-A-8-107639) a permanent magnet type synchronous motor of an internal magnet type in which the permanent magnets are buried in the rotor iron core. In this case, the substantial air gap length, as taken from the stator side, is equal to the gap between the stator and the rotor so that the reaction of the stator is increased to facilitate the field-weakening control.

Since the permanent magnets having a high magnetic resistance are arranged on the magnetic path of a d-axis but not on the magnetic path of a q-axis, on the other hand, the magnetic resistance changes with the position in the circumferential direction so that a q-axis inductance Lq grows larger than a d-axis inductance Ld to exhibit the counter saliency. By feeding a proper d-axis current, therefore, it is possible to generate not only the magnet torque on the basis of the magnetic flux of the permanent magnets and the q-axis current but also the reluctance torque, thereby to reduce the q-axis current necessary for generating the torque.

In the aforementioned permanent magnet type synchronous motor of the related art, however, the size of the portions outside of the permanent magnets in the radial direction of the rotor iron core has to be enlarged so that a sufficient strength may be provided for the centrifugal force to be generated in the permanent magnets when the synchronous motor is rotated at a high speed. However, both the centrifugal force due to the own weight of the portions outside of the permanent magnets in the radial direction of the rotor iron core and the centrifugal force to be generated in the permanent magnets are applied to the relative thin portions outside of the end portions of the permanent magnets in the radial direction of the rotor iron core, so that the strength of the rotor iron core is lowered.

It is, therefore, conceivable to increase the size of the portions outside of the end portions of the permanent magnets in the radial direction of the rotor iron core. In this case, however, the leakages of magnetic fluxes increase so much that not only a high torque cannot be generated but also a distortion is caused in the magnetic flux distribution of the gaps to generate harmonic components in the magnetic flux density waveforms thereby to cause torque oscillations.

The invention has an object to solve the aforementioned problems of the permanent magnet type synchronous motor of the related art and to provide a permanent magnet type synchronous motor which can enhance the strength of the rotor iron core and generate a high torque thereby to suppress the generation of toque oscillations.

According to the invention, therefore, there is provided a permanent magnet type synchronous motor which comprises: a rotor iron core rotatably arranged and having holes in a plurality of portions in the circumferential direction; permanent magnets assembled in the holes; a stator iron core; and coils arranged in the stator iron core.

Moreover, the above-described permanent magnet includes a straight portion extending widthwise, tapered portions formed at both ends of the straight portion and each extending obliquely outward in a direction of approaching the other, and an arcuate portion jointing the two tapered portions and, is supported by tapered portions formed at both ends of the holes and each extending obliquely outward in a direction of approaching the other.

In another permanent magnet type synchronous motor of the invention, moreover, a clearance is formed between the arcuate portion of the permanent magnet and the arcuate portion of the rotor iron core.

In still another permanent magnet type synchronous motor of the invention, moreover, the tapered portions and the arcuate portion of the permanent magnet are magnetized to one polarity whereas the straight portion of the permanent magnet is magnetized to the other polarity.

In sill another permanent magnet type synchronous motor of the invention comprises: a rotor rotatably arranged and including a rotor iron core and permanent magnets arranged in the vicinity of the outer circumferential edge of the rotor iron core; and a stator arranged around the outer circumference of the rotor and including a stator iron core and coils wound on the stator iron core.

Moreover, the above-described permanent magnet includes a main magnetic pole portion, and auxiliary pole portions made integral with the main magnetic pole portion at the magnetic pole end portions across bent portions and magnetized to the same polarity as that of the main magnetic pole portion, so that the magnetic paths at the magnetic pole end portions are saturated by the magnetic fluxes flowing out from the auxiliary pole portions.

In still another permanent magnet type synchronous motor of the invention, moreover, the auxiliary pole portion has tapered portions.

In still another permanent magnet type synchronous motor of the invention, moreover, holes matching the permanent magnets and having tapered portions are formed in a plurality of portions in the circumferential direction of the rotor iron core, and the permanent magnets are individually assembled in the holes and supported by the tapered portions.

In still another permanent magnet type synchronous motor of the invention, moreover, the opening angle of the main magnetic pole portion is set to about the following value of the slot pitch of the stator iron core:

$$n + 1/2 \text{ (wherein } n\text{: an integer).}$$

Fig. 1 is a sectional view of an essential portion of a rotor in the first embodiment of the invention.

Fig. 2 is a longitudinal sectional view of a permanent magnet type synchronous motor according to the first embodiment of the invention.

Fig. 3 is a transverse sectional view of an essential portion of the permanent magnet type synchronous motor according to the first embodiment of the invention.

Fig. 4 is a diagram comparing the first characteristics of the permanent magnet type synchronous motor.

Fig. 5 is a diagram of the first characteristics of the permanent magnet type synchronous motor according to the first embodiment of the invention.

Fig. 6 is a diagram comparing the second characteristics of the permanent magnet type synchronous motor.

Fig. 7 is a diagram of the second characteristics of the permanent magnet type synchronous motor according to the first embodiment of the invention.

Fig. 8 is a diagram comparing the third characteristics of the permanent magnet type synchronous motor.

Fig. 9 is an enlarged view of a rotor in the second embodiment of the invention.

Fig. 10 is a diagram showing a magnetic flux pattern in the second embodiment of the invention.

Fig. 11 is a diagram comparing the amounts of magnetic flux in the second embodiment of the invention.

Fig. 12 is a diagram comparing the motor torques in the second embodiment of the invention.

The invention will be described in detail in connection with its embodiments with reference to the accompanying drawings.

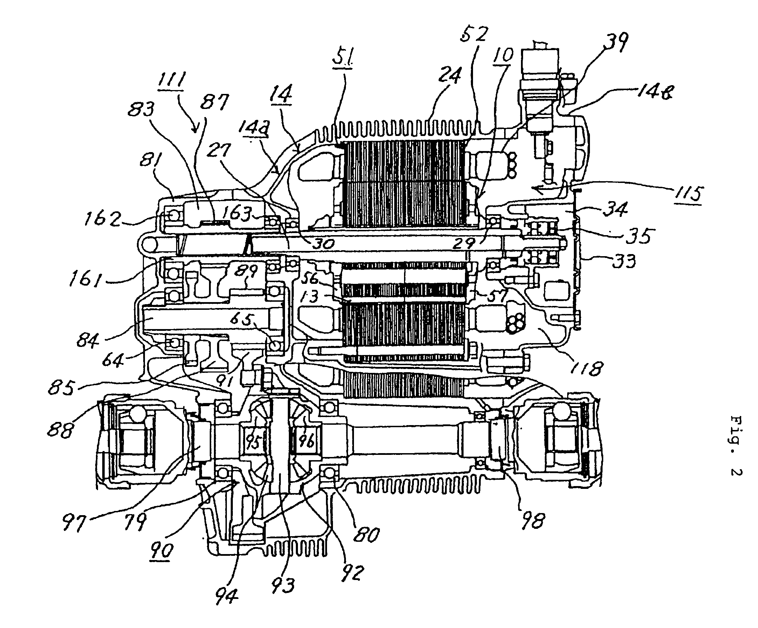

Fig. 2 is a longitudinal sectional view or a permanent magnet type synchronous motor according to a first embodiment of the invention.

In Fig. 2, reference numeral 111 designates a motor assembly, and numeral 14 designates a motor case casing a permanent magnet type synchronous motor 115.

The motor case 14 is composed of a generally bottomed cylindrical portion 14a and a cover portion 14b covering one end of the cylindrical portion 14a to define a sealed motor chamber 118. A plurality of fins 24 are formed on the outer circumference of the cylindrical portion 14a.

Moreover, the cylindrical portion 14a and the cover portion 14b are holed at the bottom center and at the cover center to arrange a motor shaft 27 through the holes, and this motor shaft 27 is rotatably supported by bearings 29 and 30. Moreover, the cover portion 14b is recessed adjacent to the hole, and this recess is closed by a cover member 33 to form a sensor chamber 34.

In this sensor chamber 34, there is arranged a resolver 35 for detecting the position of the magnetic poles of the permanent magnet type synchronous motor 115 on the basis of the rotation of the motor shaft 27.

Specifically, the permanent magnet type synchronous motor 115 includes: a rotor 10 mounted on the motor shaft 27 approximately in the middle thereof in the axial direction so that it is rotated together with the motor shaft 27; and a stator 51 fixed on the inner circumference of the cylindrical portion 14a and opposed co the rotor 10. The stator 51 is composed of a stator iron core 52, and three-phase (i.e., U-phase, V-phase and W-phase) coils 39 wound on the stator iron core 52.

As a result, the rotor 10 can be rotated by feeding the individual coils 39 with the three-phase AC currents which are generated by the not-shown inverter.

The rotor 10 is composed of: a not-shown rotor iron core fitted on the motor shaft 27 with a plurality of electromagnetic steel sheets being laminated; and permanent magnets 13 arranged in the vicinity of the outer circumferential edges of the rotor iron core. The permanent magnets 13 are arranged at an equal pitch in a plurality of circumferential portions of the rotor 10 and are fixed by stoppers 56 and 57 arranged at both ends of the rotor 10, to establish the magnetic poles.

On the other hand, a rear case 81 is attached to the bottom of the cylindrical portion 14a to establish a torque transmission chamber 83 between the bottom of the cylindrical portion 14a and the rear case 81. In the torque transmission chamber 83, moreover, there is arranged a sleeved-like transmission shaft 161 which is coaxially fitted on the motor shaft 27 by means of splines. The transmission shaft 161 is rotatably supported by bearings 162 and 163. In parallel with the transmission shaft 161, on the other hand, there is arranged a counter shaft 84 which is rotatably supported by bearings 64 and 65.

Moreover, a counter gear 87 is fixed on the transmission shaft 161, and a parking gear 85 and a counter driven gear 88 are fixed on the counter shaft 84, such that the counter drive gear 87 and the counter driven gear 88 are made to mesh with each other.

In addition, an output gear 89 is arranged on the counter shaft 84, and its rotation is transmitted to a differential unit 90.

This differential unit 90 is composed of: a differential case 92 equipped with a ring gear 91 on the outer circumference and rotatably supported through bearings 79 and 80; a pinion shaft 93 fixed in the differential case 92; a pinion 94 rotatably supported by the pinion shaft 93; and left and right side gears 95 and 96 meshing with the pinion 94. As a result, the differential unit 90 transmits the rotation, as transmitted to the ring gear 91, separately to left and right drive shafts 97 and 98.

Here will be described the permanent magnet type synchronous motor 115.

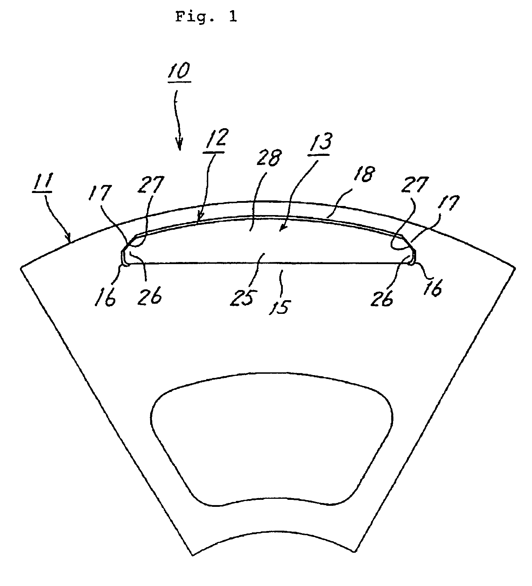

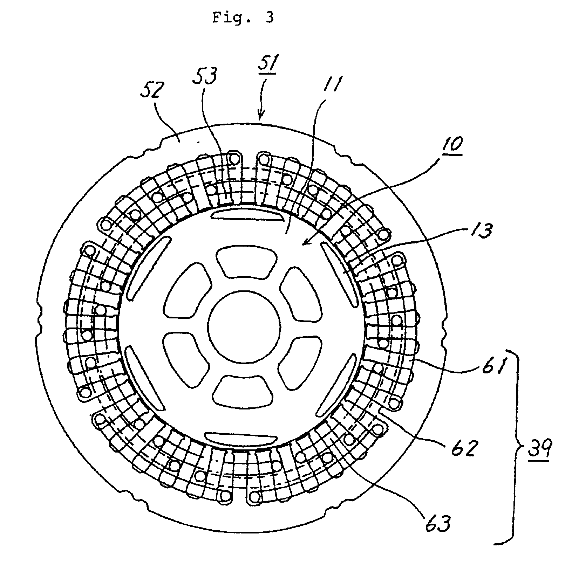

Fig. 1 is a sectional view of an essential portion of a rotor in the first embodiment of the invention, and Fig. 3 is a transverse sectional view of an essential portion of the permanent magnet type synchronous motor according to the first example of the invention.

In these Figures, reference numeral 10 designates a rotor arranged in a rotatable manner, and numeral 11 designates a rotor iron core. The stator 51 is arranged around the rotor 10. On the other hand, reference numeral 52 designates a stator iron core, and numeral 53 designates stator poles which are formed to protrude from a plurality of circumferential portions of the stator iron core 52 toward the rotor 10. In the stator iron core 52, there are arranged the coils 39 which are composed of a U-phase winding 61, a V-phase winding 62 and a W-phase winding 63. In a plurality of circumferential portions of the rotor iron core 11 or six portions in this embodiment, there are formed holes 12 having a section of letter "D". The permanent magnets 13 having a section of letter "D" are assembled by inserting and fixing them in the holes 12.

Each hole 12 is formed of: a straight portion 15 extending in the tangential direction; cut portions 16 formed at both ends of the straight portion 15; tapered portions 17 each extending obliquely outward from the cut portions 16 in the direction of approaching the other; and an arcuate portion 18 extending approximately in parallel with the outer peripheral edge of the rotor iron core 11.

The permanent magnet 13 is shaped to match the shape of the hole 12 and is composed of: a straight portion 25 extending in the tangential direction; rising portions 26 formed at both ends of the straight portion 25; tapered portions 27 each extending obliquely outward from the rising portions 26 in the direction of approaching the other; and an arcuate portion 28 joining the two tapered portions 27 and extending approximately in parallel with the outer circumferential edge of the rotor iron core 11.

Moreover, the hole 12 and the permanent magnet 13 are so sized that the individual tapered portions 17 and 27 butt against each other when the permanent magnet 13 is inserted into the hole 12 while leaving small clearances between the arcuate portions 18 and 28. As a result, the permanent magnets 13 are supported by the tapered portions 17, and, when the rotor 10 is rotated, a centrifugal force is generated in the permanent magnets 13 and is applied to the tapered portions 17 but not to the arcuate portions 18 to make no contribution to the support of the permanent magnets 13, so that the arcuate portions 18 can be prevented from any breakage. Moreover, the small clearance is established between the individual arcuate portions 18 and 28, so that the arcuate portions 18 and 28 are easily faced.

Moreover, each of the tapered portions 17 is formed to be inclined from the cut portions 16 in the direction of approaching the other, so that a sufficient thickness can be retained between the tapered portions 17 and the outer circumferential edge of the rotor iron core 11. As a result, the tapered portions 17 will not break even if the rotor 10 is rotated at a high speed to apply a high centrifugal force to the tapered portions 17. Moreover, obtuse angles are made between the cut portions 16 and the tapered portions 17 and between the tapered portions 17 and the arcuate portion 18, so that the stress can be prevented from being concentrated. This makes it possible to enhance the strength of the rotor iron core 11 around the tapered portions 17.

Here, the arcuate portions 18 cover the permanent magnets 13 radially outside of the permanent magnets 13, so that the fragments of the permanent magnets 13 are prevented, when the permanent magnets 13 are broken or smashed by their own internal defects or by the excessive rotations of the rotor 10, from being scattered therearound. In this case, it is sufficient for the arcuate portions 18 only to have a function to cover the permanent magnets 13, so that their radial size can be reduced to reduce the radial size of the tapered portions 17. As a result, the leakages of magnetic flux from the arcuate portions 18 can be reduced to increase the amount magnetic flux to pass through the gap between the stator 51 and the rotor 10, so that more torque corresponding to that amount can be generated by the permanent magnet type synchronous motor 115 (Fig. 2). In addition, the distortion to occur in the magnetic flux distribution of the gap can be remarkably reduced to reduce the harmonic components in the waveforms in the magnetic flux density thereby to prevent the torque oscillations.

In the vicinity of the tapered portions 17, moreover, the rotor iron core 11 is saturated to suppress the passage of the magnetic fluxes of the arcuate portions 18 near the tapered portions 17. This makes it possible to suppress the short-circuiting of the magnetic fluxes of the arcuate portions 18 at the rotor iron core 11 thereby to increase the amount of magnetic flux to pass through the gap between the stator 51 and the rotor 10. As a result, the motor torque can be increased.

Here, the tapered portions 27 and the arcuate portions 28 of the permanent magnets 13 are magnetized to one polarity, and the straight portions 25 of the permanent magnets 13 are magnetized to the other polarity.

If the current to flow through the coils 39 is a little as in the case that the permanent magnet type synchronous motor 115 is driven in a low torque region, a portion of the magnetic flux of the arcuate portions 18 does not pass through the stator iron core 52 but short-circuits the rotor iron core 11. This short-circuiting and the substantial reduction in the air gap length to lower the magnetic resistance act together to lower the counter electromotive force, so that the number of revolutions of the rotor 10 can be increased without raising the supply voltage. As a result, the d-axis current for a field-weakening control can be accordingly reduced to enhance the efficiency of the permanent magnet type synchronous motor 115.

When the permanent magnet type synchronous motor 115 thus constructed is to be constructed, the work of inserting the permanent magnets 13 into the holes 12 after the permanent magnets 13 are magnetized is made extremely difficult because the holes 12 are attracted by the magnetic forces of the permanent magnets 13. Therefore, the permanent magnets 13 before the magnetization are made to be assembled in the holes 12, and after this, a pulsed magnetic field is generated to magnetize the permanent magnets 13. This facilitates the magnetization because the radial size of the arcuate portions 18 is small.

Here will be described the characteristics of the permanent magnet type synchronous motor 115 of the invention and the characteristics of the permanent magnet type synchronous motor of the related art.

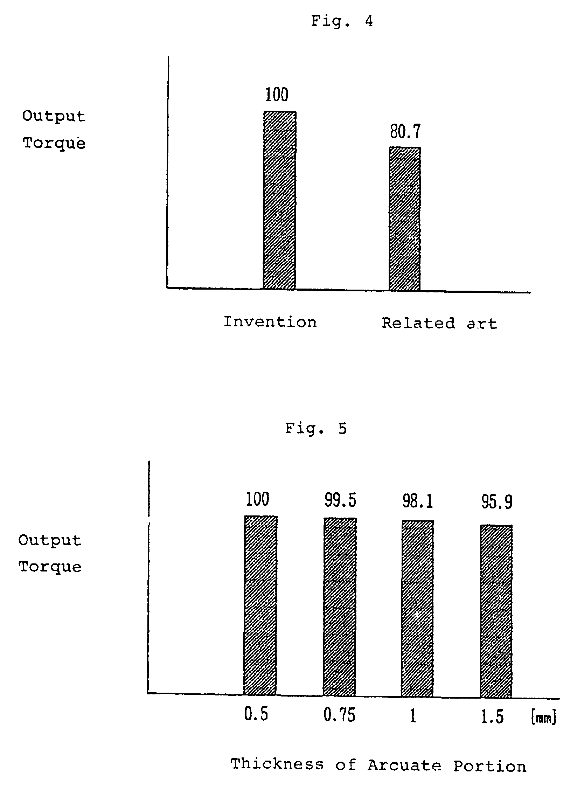

Fig. 4 is a diagram comparing the first characteristics of the permanent magnet type synchronous motor. In Fig. 4, the abscissa indicates the kinds of the permanent magnet type synchronous motor, and the ordinate indicates the output torque.

As is apparent from the diagram, if the permanent magnet type synchronous motor 115 (of Fig. 2) has an output torque of 100, the output torque by the permanent magnet type synchronous motor of the related art is 80.7. Here, both the thickness of the arcuate portions 18 (of Fig. 1) in the permanent magnet type synchronous motor 115 of the invention and the thickness between the outer circumferential edge of the rotor iron core and the permanent magnets in the permanent magnet type synchronous motor of the related art, that is, the iron core thickness of the magnetic pole upper portions are set to 1.5 [mm] to make the magnets equal in volume, thereby to generate counter electromotive forces at the same level.

Fig. 5 is a diagram of the first characteristics of the permanent magnet type synchronous motor according to the first embodiment of the invention. In Fig. 5, the abscissa indicates the thickness of the arcuate portions 18 (of Fig. 1), and the ordinate indicates the output torque.

As is apparent from the diagram, if the permanent magnet type synchronous motor 115 (of Fig. 2) has an output of 100 for a thickness of 0.5 [mm] of the arcuate portions 18, the output torques are 99.5, 98.1 and 95.9, for the thicknesses 0.75 [mm], 1 [mm] and 1.5 [mm] of the arcuate portions 18, respectively.

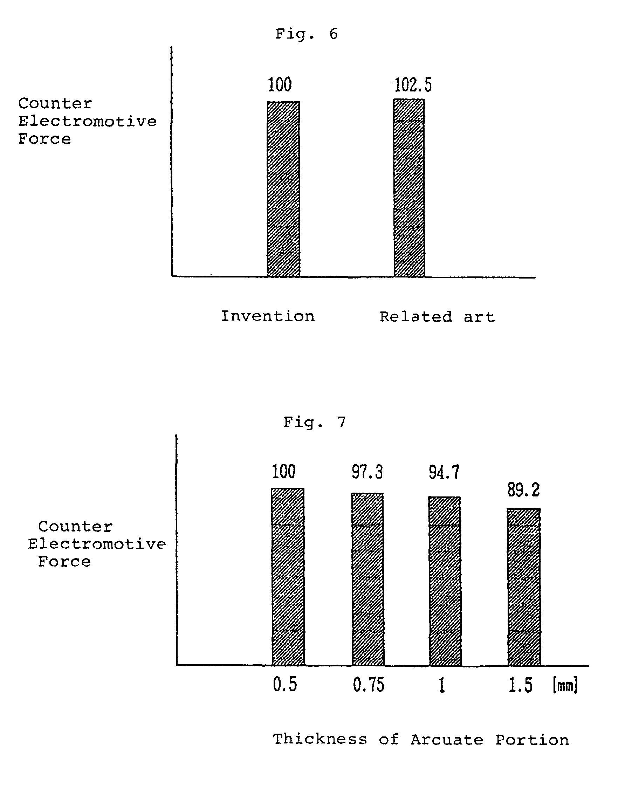

Fig. 6 is a diagram comparing the second characteristics of the permanent magnet type synchronous motor. In Fig. 6, the abscissa indicates the kinds of the permanent magnet type synchronous motor 115 (of Fig. 2), and the ordinate indicates the counter electromotive force.

As is apparent from the diagram, if the permanent magnet type synchronous motor has a counter electromotive force of 100, the counter electromotive force by the permanent magnet type synchronous motor of the related art is 102.5. Here, both the thickness of the arcuate portions 18 (of Fig. 1) in the permanent magnet type synchronous motor 115 of the invention and the iron core thickness of the magnetic pole upper portions in the permanent magnet type synchronous motor of the related art are set to 1.5 [mm] to make the magnets equal in volume thereby to generate counter electromotive forces at the same level.

Fig. 7 is a diagram of the second characteristics of the permanent magnet type synchronous motor according to the first embodiment of the invention. In Fig. 7, the abscissa indicates the thickness of the arcuate portions 18 (of Fig. 1), and the ordinate indicates the counter electromotive force.

As is apparent from the diagram, if the permanent magnet type synchronous motor 115 (of Fig. 2) has a counter electromotive force of 100 for a thickness of 0.5 [mm] of the arcuate portions 18, the counter electromotive forces are 97.3, 94.7 and 89.2 for the thicknesses 0.75 [mm], 1 [mm] and 1.5 [mm] of the arcuate portions 18, respectively.

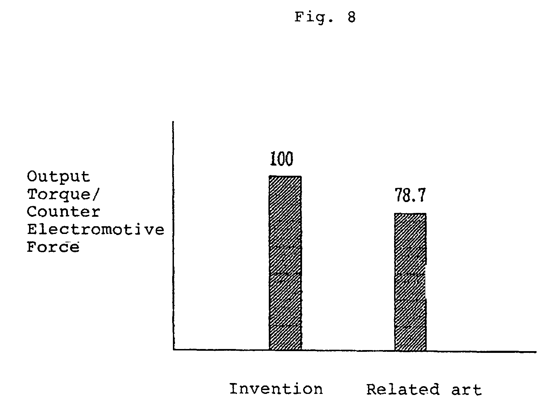

Fig. 8 is a diagram comparing the third characteristics of the permanent magnet type synchronous motor. In Fig. 8, the abscissa indicates the kinds of the permanent magnet type synchronous motor 115 (of Fig. 2), and the ordinate indicates the output torque / counter electromotive force.

As is apparent from the diagram, if the permanent magnet type synchronous motor has an output torque / counter electromotive force of 100, the output torque / counter electromotive force by the permanent magnet type synchronous motor of the related art is 78.7. Here, both the thickness of the arcuate portions 18 (of Fig. 1) in the permanent magnet type synchronous motor 115 of the invention and the iron core thickness of the magnetic pole upper portions in the permanent magnet type synchronous motor of the related art are set to 1.5 [mm] to make the magnets equal in volume thereby to generate counter electromotive forces at the same level.

Here will be described the second embodiment of the invention.

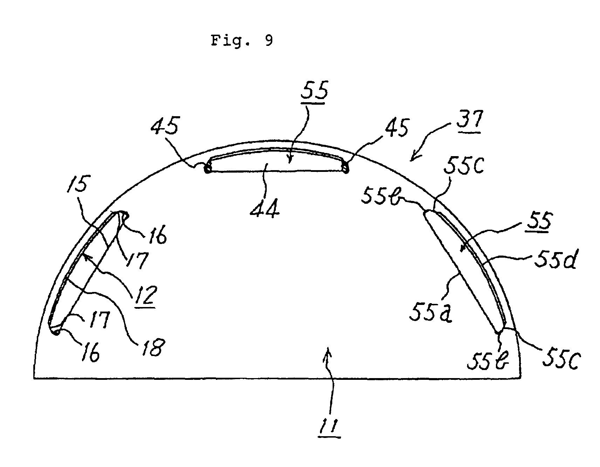

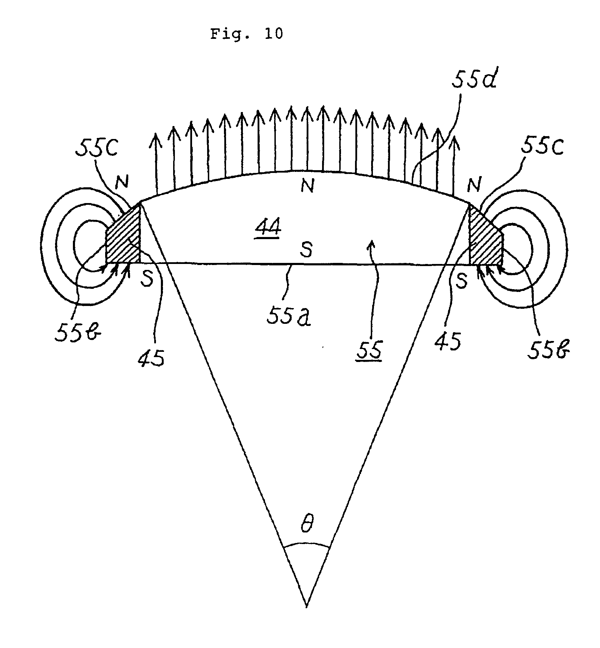

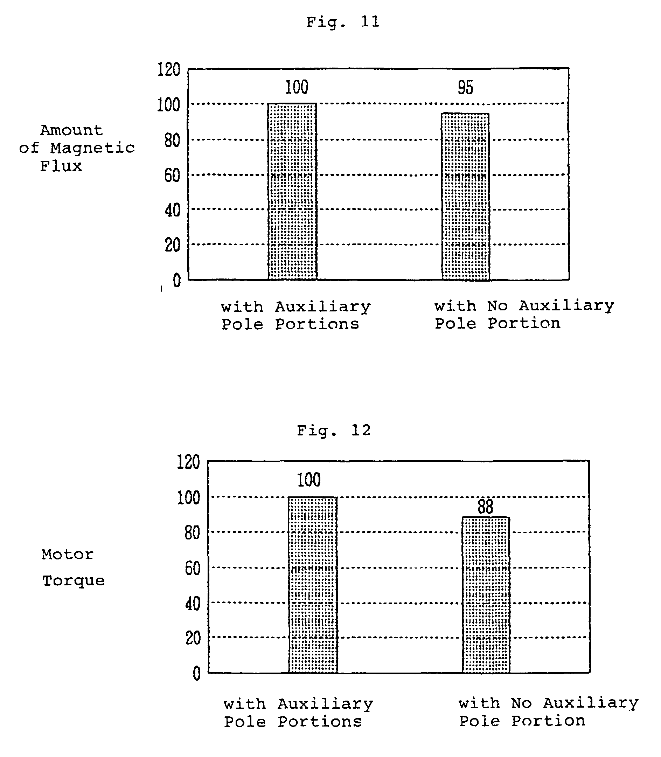

Fig. 9 is an enlarged view of a rotor in the second embodiment of the invention; Fig. 10 is a diagram showing a magnetic flux pattern in the second embodiment of the invention; Fig. 11 is a diagram comparing the amounts of magnetic flux in the second embodiment of the invention; and Fig. 12 is a diagram comparing the motor torques in the second embodiment of the invention.

In Fig. 9: numeral 11 designates a rotor iron core prepared by laminating electromagnetic steel sheets; numeral 37 designates a rotor; and numeral 55 designates permanent magnets. In the rotor iron core 11, there are formed holes for housing and holding the permanent magnets 55.

The permanent magnet 55 is formed into an approximately semicylindrical shape and is composed of: a straight portion 55a extending in the tangential direction; rising portions 55b formed at both ends of the straight portion 55a; tapered portions 55c each extending obliquely outward from the rising portions 55b in the direction of approaching the other; and an arcuate portion 55d jointing the two tapered portions 55c and extending approximately in parallel with the outer circumferential edge of the rotor iron core 11.

Moreover, a main magnetic pole portion 44 is formed between the straight portion 55a and the arcuate portion 55d. Auxiliary pole portions 45 are formed at the magnetic pole end portions adjacent to and integrally with the main magnetic pole portion 44 with the bent portions at the adjoining points between the tapered portions 55c and the arcuate portion 55d forming boundaries . Both the main magnetic pole portion 44 and the auxiliary pole portions 45 are magnetized to the same polarity. In this embodiment, the tapered portions 55c and the arcuate portion 55d are magnetized to one polarity whereas the straight portion 55a is magnetized to the other polarity.

On the other hand, the hole 12 is formed into an approximately semicylindrical shape and is composed of: a straight portion 15 extending in the tangential direction; cut portions 16 formed at both ends of the straight portion; tapered portions 17 each extending obliquely outward from the cut portions 16 in the direction of approaching the other; and an arcuate portion 18 joining the two tapered portions 17 and extending approximately in parallel with the outer circumferential edge of the rotor iron core 11.

Moreover, since the auxiliary pole portions 45 are magnetized, the magnetic fluxes, as generated by the auxiliary pole portions 45, flow from the tapered portions 55c to the rotor iron core 11 approximately normal to the not-shown tapered face.

Thus, the magnetic path can be more saturated in the vicinity of the magnetic pole end portions in the rotor iron core 11, that is, in the vicinity of the auxiliary pole portions 45. As a result, the magnetic fluxes can be prevented from being short-circuited at the magnetic pole end portions to accordingly increase the flows of magnetic flux passing through the gap between the stator 51 (of Fig. 3) and the rotor 10, as shown in Fig. 11, thereby to increase the motor torque, as shown in Fig. 12. That is, when the amount of magnetic flux are taken as 100 with the auxiliary pole portions 45, the amount of magnetic flux becomes 95 without the same. When the motor torque is taken as 100 with the auxiliary pole portions 45, the motor torque becomes 88 without the same.

Since the main magnetic pole portion 44 and the auxiliary pole portions 45 are made integral, the permanent magnet type synchronous motor 115 can be simplified in its structure to reduce the numbers of parts and assembling steps thereby to lower the cost for the permanent magnet type synchronous motor 115.

Moreover, the auxiliary pole portions 45 are formed with the bent portions at the adjoining points between the tapered portions 55c and the arcuate portion 55d forming boundaries, so that the distance between the N poles and the S poles in the auxiliary pole portions 45 can be shortened. As a result, not only the volume of the magnets in the auxiliary pole portions 45 can be reduced but also the distance between the outer circumference of the rotor iron core 11 and the auxiliary pole portions 45 can be elongated, so that the magnetic path can be sufficiently saturated.

In addition, the inter-pole distance in the circumferential direction of the rotor 37 can be elongated to enhance the strength of the rotor iron core 11.

Here, the permanent magnets 55 are supported by the tapered portions 17, and centrifugal forces are generated in the permanent magnets 55 when the rotor 10 is rotated. The centrifugal forces are applied to the tapered portions 17 but not to the arcuate portion 18 to make no contribution to the support of the permanent magnets 55, so that the arcuate portion 18 can be prevented from any breakage. Moreover, a small clearance is formed between the individual arcuate portions 18 and 55d, so that the arcuate portions 18 and 55d can be easily faced.

In addition, each of the tapered portions 17 is formed to be inclined from the cut portions 16 in the direction of approaching the other, so that a sufficient thickness can be retained between the tapered portions 17 and the outer circumferential edge of the rotor iron core 11. As a result, the tapered portions will not break even if the rotor 10 is rotated at a high speed to apply a high centrifugal force to the tapered portions 17. Moreover, obtuse angles are made between the cut portions 16 and the tapered portions 17, and between the tapered portions 17 and the arcuate portion 18, so that the stress can be prevented from being concentrated. This makes it possible to enhance the strength of the rotor iron core 11 around the tapered portions 17.

Here, the arcuate portions 18 cover the permanent magnets 55 radially outside of the permanent magnets 55, so that the fragments of the permanent magnets 55 are prevented, when the permanent magnets 55 are broken or smashed by their own internal defects or by the excessive rotations of the rotor 10, from being scattered therearound. In this case, it is sufficient for the arcuate portions 18 only to have a function to cover the permanent magnets 55, so that their radial size can be reduced to reduce the radial size of the tapered portions 17. As a result, the leakages of magnetic flux from the arcuate portions 18 can be reduced to increase the amount of magnetic flux to pass through the gap between the stator 51 and the rotor 10, so that more torque corresponding to that amount can be generated by the permanent magnet type synchronous motor 115 (of Fig. 2). In addition, the distortion to occur in the magnetic flux distribution of the gap can be remarkably reduced to reduce the harmonic components in the waveforms in the magnetic flux density thereby to prevent the torque oscillations.

If the current to flow through the coils 39 is a little as in the case that the permanent magnet type synchronous motor 115 is driven in a low torque region, a portion of the magnetic flux of the arcuate portions 18 does not pass through the stator iron core 52 but short-circuits the rotor iron core 11. This short-circuiting and the substantial reduction in the air gap length to lower the magnetic resistance act together to lower the counter electromotive force, so that the number of revolutions of the rotor 10 can be increased without raising the supply voltage . As a result, the d-axis current for a field-weakening control can be accordingly reduced to enhance the efficiency of the permanent magnet type synchronous motor 115.

When the permanent magnet type synchronous motor 115 thus constructed is to be constructed, the work of inserting the permanent magnets 55 into the holes 12 after the permanent magnets 55 are magnetized is made extremely difficult because the holes 12 are attracted by the magnetic forces of the permanent magnets 55. Therefore, the permanent magnets 55 before the magnetization are made to be assembled in the holes 12, and after this, a pulsed magnetic field is generated to magnetize the permanent magnets 55. This facilitates the magnetization because the radial size of the arcuate portions 18 is small.

Moreover, if the opening angle of the main magnetic pole portion 44 is designated by θ and if the pitch of the individual stator poles 53 of the stator iron core 52, i.e., the slot pitch is designated by p, then the opening angle θ is expressed as follows:

$$\theta \fallingdotseq (n + 1/2) \cdot p \ (n: \text{an integer}).$$

In this case, even if the rotor 37 is rotated to be located in any position with respect to the stator 51, the number of slots between each of the stator poles 53 of the stator iron core 52 confronting the main magnetic pole portions 44 is always at the constant value n. As a result, the generation of the cogging torque can be suppressed to suppress the generation of vibrations.

Here, the invention should not be limited to the foregoing embodiments but could be modified in various manners on the basis of its spirit, and these modifications should not be excluded from the scope of the invention.

According to the invention, as has been described hereinbefore, a permanent magnet type synchronous motor comprises : a rotor iron core rotatably arranged and having holes in a plurality of portions in the circumferential direction; permanent magnets assembled in the holes; a stator iron core; and coils arranged in the stator iron core.

Moreover, the permanent magnet includes a straight portion extending widthwise, tapered portions formed at both ends of the straight portion and each extending obliquely outward in a direction of approaching the other, and an arcuate portion jointing the two tapered portions, and is supported by tapered portions formed at both ends of the holes and each extending obliquely outward in a direction of approaching the other.

In this case, the permanent magnets are supported by the tapered portions, and, when the rotor is rotated, a centrifugal force is generated in the permanent magnets and is applied to the tapered portions of the holes but not to the arcuate portions to make no contribution to the support of the permanent magnets, so that the arcuate portions can be prevented from any breakage.

Moreover, each of the tapered portions is formed to be inclined from the cut portions at both ends of the holes in the direction of approaching the other, so that a sufficient thickness can be retained between the tapered portions and the outer cirumferential edge of the rotor iron core. As a result, the tapered portions will not break even if the rotor is rotated at a high speed to apply a high centrifugal force to the tapered portions. Moreover, obtuse angles are made between the tapered portions and the arcuate portion, so that the stress can be prevented from being concentrated. This makes it possible to enhance the strength of the rotor iron core around the tapered portions.

Moreover, the arcuate portions cover the permanent magnets radially outside of the permanent magnets, so that the fragments of the permanent magnets are prevented, when the permanent magnets are broken or smashed by their own internal defects or by the excessive rotations of the rotor, from being scattered therearound. In this case, it is sufficient for the arcuate portions only to have a function to cover the permanent magnets, so that their radial size can be reduced to reduce the radial size of the tapered portions. As a result, the leakages of magnetic flux from the arcuate portions can be reduced to increase the amount of magnetic flux to pass through the gap between the stator and the rotor, so that more torque corresponding to that amount can be generated by the permanent magnet type synchronous motor. In addition, the distortion to occur in the magnetic flux distribution of the gap can be remarkably reduced to reduce the harmonic components in the waveforms in the magnetic flux density thereby to prevent the torque oscillations.

In the vicinity of the tapered portions, moreover, the rotor iron core is saturated to suppress the passage of the magnetic fluxes of the arcuate portions near the tapered portions. This makes it possible to suppress the short-circuiting of the magnetic fluxes of the arcuate portions at the rotor iron core thereby to increase the amount of magnetic flux to pass through the gap between the stator and the rotor.

If the current to flow through the coils is a little as in the case that the permanent magnet type synchronous motor is driven in a low torque region, a portion of the magnetic flux of the arcuate portions does not pass through the stator iron core but short-circuits the rotor iron core. This short-circuiting and the substantial reduction in the air gap length to lower the magnetic resistance act together to lower the counter electromotive force, so that the number of revolutions of the rotor can be increased without raising the supply voltage. As a result, the d-axis current for a field-weakening control can be accordingly reduced to enhance the efficiency.

Moreover, the magnetization of the permanent magnets is facilitated because the radial size of the arcuate portions is small.

In another permanent magnet type synchronous motor of the invention, moreover, a clearance is formed between the arcuate portion of the permanent magnet and the arcuate portion of the rotor iron core.

In this case, the clearance is formed between the arcuate portion of the permanent magnet and the arcuate portion of the rotor iron core so that the individual arcuate portions are easily faced.

In still another permanent magnet type synchronous motor of the invention, moreover, the tapered portions and the arcuate portion of the permanent magnet are magnetized to one polarity whereas the straight portion of the permanent magnet is magnetized to the other polarity.

In this case, in the vicinity of the tapered portions, moreover, the rotor iron core is saturated to suppress the passage of the magnetic fluxes of the arcuate portions near the tapered portions. This makes it possible to suppress the short-circuiting of the magnetic fluxes of the arcuate portions at the rotor iron core thereby to increase the amount of magnetic flux to pass through the gap between the stator and the rotor. As a result, the motor torque can be increased.

Still another permanent magnet type synchronous motor of the invention comprises: a rotor rotatably arranged and including a rotor iron core and permanent magnets arranged in the vicinity of the outer circumferential edge of the rotor iron core; and a stator arranged around the outer circumference of the rotor and including a stator iron core and coils wound on the stator iron core.

Moreover, the permanent magnet includes a main magnetic pole portion, and auxiliary pole portions made integral with the main magnetic pole portion at the magnetic pole end portions with bent portions forming boundaries and magnetized to the same polarity as that of the main magnetic pole portion, so that the magnetic paths at the magnetic pole end portions are saturated by the magnetic fluxes flowing out from the auxiliary pole portions.

In this case, since the auxiliary pole portions are magnetized, the magnetic fluxes, as generated by the auxiliary pole portions, flow to the rotor iron core. Thus, the magnetic path can be saturated in the vicinity of the magnetic pole end portions in the rotor iron core. As a result, the magnetic fluxes can be prevented from being short-circuited at the magnetic pole end portions to accordingly increase the flows of magnetic flux passing through the gap between the stator and the rotor, thereby to increase the motor torque.

Since the main magnetic pole portion and the auxiliary pole portions are made integral, the permanent magnet type synchronous motor can be simplified in its structure to reduce the numbers of parts and assembling steps thereby to lower the cost for the permanent magnet type synchronous motor.

Moreover, the auxiliary pole portions are formed with the bent portions forming boundaries, so that the distance between the N poles and the S poles in the auxiliary pole portions can be shortened. As a result, not only the volume of the magnets in the auxiliary pole portions can be reduced but also the distance between the outer circumference of the rotor iron core and the auxiliary pole portions can be elongated, so that the magnetic path can be sufficiently saturated.

In addition, the inter-pole distance in the circumferential direction of the rotor can be elongated to enhance the strength of the rotor iron core.

In still another permanent magnet type synchronous motor of the invention, the auxiliary pole portion has tapered portions.

In this case, since the auxiliary pole portions are magnetized the magnetic fluxes, as generated by the auxiliary pole portions, flow from the tapered portions to the rotor iron core in the direction approximately perpendicular to the rotor iron core. Thus, the magnetic path can be more saturated in the vicinity of the magnetic pole end portions in the rotor iron core. As a result, the magnetic fluxes can be prevented from being short-circuited at the magnetic pole end portions to accordingly increase the flows of magnetic flux passing through the gap between the stator and the rotor, thereby to increase the motor torque.

In still another permanent magnet type synchronous motor of the invention, moreover, holes matching the permanent magnets and having tapered portions are formed in a plurality of portions in the circumferential direction of the rotor iron core, and the permanent magnets are individually assembled in the holes and supported by the tapered portions.

In this case, a centrifugal forces is generated in the permanent magnets when the rotor is rotated. The centrifugal force is applied to the tapered portions of the holes but not to the arcuate portions to make no contribution to the support of the permanent magnets, so that the arcuate portion can be prevented from any breakage.

Moreover, a sufficient thickness can be retained between the tapered portions and the outer circumferential edge of the rotor iron core. As a result, the tapered portions will not break even if the rotor is rotated at a high speed to apply a high centrifugal force to the tapered portions. Moreover, obtuse angles are made between the tapered portions and the arcuate portion, so that the stress can be prevented from being concentrated. This makes it possible to enhance the strength of the rotor iron core around the tapered portions.

Moreover, the arcuate portions cover the permanent magnets radially outside of the permanent magnets, so that the fragments of the permanent magnets are prevented, when the permanent magnets are broken or smashed by their own internal defects or by the excessive rotations of the rotor, from being scattered therearound. In this case, it is sufficient for the arcuate portions only to have a function to cover the permanent magnets, so that their radial size can also be reduced to reduce the radial size of the tapered portions. As a result, the leakages of magnetic flux from the arcuate portions can be reduced to increase the amount of magnetic flux to pass through the gap between the stator and the rotor, so that more torque corresponding to that amount can be generated by the permanent magnet type synchronous motor. In addition, the distortion to occur in the magnetic flux distribution of the gap can be remarkably reduced to reduce the harmonic components in the waveforms in the magnetic flux density thereby to prevent the torque oscillations.

If the current to flow through the coils is a little as in the case that the permanent magnet type synchronous motor is driven in a low torque region, a portion of the magnetic flux of the arcuate portions does not pass through the stator iron core but short-circuits the rotor iron core. This short-circuiting and the substantial reduction in the air gap length to lower the magnetic resistance act together to lower the counter electromotive force, so that the number of revolutions of the rotor can be increased without raising the supply voltage. As a result, the d-axis current for a field-weakening control can be accordingly reduced to enhance the efficiency.

Moreover, the magnetization of the permanent magnets is facilitated because the radial size of the arcuate portions is small.

In still another permanent magnet type synchronous motor of the invention, moreover, the opening angle of the main magnetic pole portion is set to about the following value of the slot pitch of the stator iron core:

$$n + 1/2 \text{ (wherein n: an integer).}$$

In this case, even if the rotor is rotated to be located in any position with respect to the stator, the number of slots of the stator iron core confronting the main magnetic pole portions is always at the constant value n. As a result, the generation of the cogging torque can be suppressed to suppress the generation of vibrations.

Various modifications and applications may be adopted by those skilled in the art without departing from the true scope of the invention as defined by the appended claims.

## Claims

1.  A permanent magnet type synchronous motor **characterized** comprising a rotor iron core (11) rotatably arranged and having holes (12) in a plurality of portions in the circumferential direction; permanent magnets (13) assembled in said holes; a stator iron core (52); and coils (39) arranged in said stator iron core, said permanent magnet (13) including a straight portion (25) extending widthwise, tapered portions (27) formed at both ends of said straight portion and each extending obliquely outward in a direction of approaching the other, and an arcuate portion (28) jointing said two tapered portions (27), and being supported by tapered portions (17) formed at both ends of said holes (12) and each extending obliquely outward in a direction of approaching the other.

2.  A permanent magnet type synchronous motor as set forth in claim 1, wherein a clearance is formed between the arcuate portion (28) of said permanent magnet (13) and the arcuate portion (18) of said rotor iron core (11).

3.  A permanent magnet type synchronous motor as set forth in claim 1 or 2, wherein the tapered portions (27) and the arcuate portion (28) of said permanent magnet (13) are magnetized to one polarity whereas the straight portion (25) of said permanent magnet is magnetized to the other polarity.

## Patentansprüche

1.  Permanentmagnet-Synchronmotor mit:

    einem Rotoreisenkern (11), der drehbar angeordnet ist und Öffnungen (12) in mehreren Abschnitten in der Umfangsrichtung aufweist; in den Öffnungen angeordneten Permanentmagneten (13);

einem Statoreisenkern (52); und

im Statoreisenkern angeordneten Wicklungen (39);

wobei der Permanentmagnet (13) aufweist: einen sich in der Breitenrichtung erstreckenden geraden Abschnitt (25), schräge Abschnitte (27), die an beiden Enden des geraden Abschnitts ausgebildet sind und sich jeweils in Richtung ihrer wechselseitigen Annäherung schräg nach außen erstrekken, und einen Bogenabschnitt (28), der die beiden schrägen Abschnitte (27) verbindet, wobei der Permanentmagnet durch schräge Abschnitte (17) gehalten wird, die an beiden Seiten der Öffnungen (12) ausgebildet sind und sich jeweils in Richtung ihrer wechselseitigen Annäherung schräg nach außen erstrecken.

2. Permanentmagnet-Synchronmotor nach Anspruch 1, wobei zwischen dem Bogenabschnitt (28) des Permanentmagneten (13) und dem Bogenabschnitt (18) des Rotoreisenkerns (11) ein Zwischenraum gebildet wird.

3. Permanentmagnet-Synchronmotor nach Anspruch 1 oder 2, wobei die schrägen Abschnitte (27) und der Bogenabschnitt (28) des Permanentmagneten (13) auf eine Polarität magnetisiert sind, während der gerade Abschnitt (25) des Permanentmagneten auf die andere Polarität magnetisiert ist.

**Revendications**

1. Moteur synchrone du type à aimants permanents **caractérisé en ce qu'**il comprend un noyau en fer (11) de rotor agencé à rotation et comportant des trous (12) dans une pluralité de parties dans la direction circonférentielle ; des aimants permanents (13) montés dans lesdits trous ; un noyau en fer (52) de stator ; et des enroulements (39) placés dans ledit noyau en fer de stator, ledit aimant permanent (13) comportant une partie droite (25) s'étendant dans le sens de la largeur, des parties en biseau (27) formées aux deux extrémités de ladite partie droite et s'étendant chacune en oblique vers l'extérieur, dans des directions orientées l'une vers l'autre, et une partie arquée (28) reliant lesdites deux parties en biseau (27), et étant supportée par des parties en biseau (17) formées à chaque extrémité desdits trous (12) et s'étendant chacune en oblique vers l'extérieur, dans des directions orientées l'une vers l'autre.

2. Moteur synchrone du type à aimants permanents selon la revendication 1, dans lequel un jeu est formé entre la partie arquée (28) dudit aimant permanent (13) et la partie arquée (18) dudit noyau en fer (11) de rotor.

3. Moteur synchrone du type à aimants permanents selon la revendication 1 ou 2, dans lequel les parties en biseau (27) et la partie arquée (28) dudit aimant permanent (13) sont magnétisées à une polarité tandis que la partie droite (25) dudit aimant permanent est magnétisée à l'autre polarité.

Fig. 1

Fig. 2

Fig. 3

Fig. 4

Output
Torque

100

80.7

Invention          Related art

Fig. 5

Output
Torque

100    99.5    98.1    95.9

0.5    0.75    1    1.5    [mm]

Thickness of Arcuate Portion

Fig. 6

Counter Electromotive Force

100     102.5

Invention     Related art

Fig. 7

Counter Electromotive Force

100   97.3   94.7   89.2

0.5   0.75   1   1.5   [mm]

Thickness of Arcuate Portion

Fig. 8

Output
Torque/
Counter
Electromotive
Force

100

78.7

Invention        Related art

Fig. 9

Fig. 10

Fig. 11

Amount
of Magnetic
Flux

Fig. 12

Motor
Torque